# EUROPEAN PATENT SPECIFICATION

(11) **EP 0 562 693 B1**
(45) Date of publication and mention of the grant of the patent: **06.03.1996**
(21) Application number: 93200853.5
(22) Date of filing: 24.03.1993
(51) Int. Cl.: A01K 5/00, A01C 3/06, A01D 90/10, A01F 29/06

(54) **Apparatus for shredding and mixing fibrous products for animal feed preparation, provided with an agitator device for preventing stagnation of the product being processed**
Futterschneide- und -mischvorrichtung mit Schüttelorganen zur Vermeidung von Brückenbildung
Dispositif de déchiquetage et mixage de matériau fibreux pour nourriture animale comportant un agitateur pour empêcher la stagnation du produit traité

(30) Priority: 27.03.1992 IT MI920733
(43) Date of publication of application: 29.09.1993
(73) Proprietor: OFFICINE SGARIBOLDI S.n.c. di SGARIBOLDI GIUSEPPE & C., I-20072 Camairago (Milan) (IT)
(72) Inventor: Sgariboldi, Giuseppe, I-20072 Camairago, Milan (IT)
(74) Representative: Martegani, Franco

(56) References cited:
- EP-A- 0 077 000
- EP-A- 0 162 665
- WO-A-93/00799
- DE-A- 2 621 709

## Description

This invention relates to an apparatus for shredding and mixing fibrous products for animal feed preparation, provided with a device for preventing stagnation of the product within the trough.

Known apparatus for shredding and mixing fibrous products used for preparing animal feeds consist of a trough containing members for shredding and mixing fibrous products such as dry hay, silo hay, straw etc., which are loaded into the trough from above.

Said shredding and mixing members can be positioned either horizontally or vertically within the trough, the mixed product being discharged through a door.

Apparatus of horizontal screw type are of lesser height and width than those of vertical screw type, and are suitable for installation where space is at a premium.

Apparatus with horizontal shredding members are known comprising a plurality of screws, for example one or two screws on the base of the trough and two or three overlying screws, their purpose being to shred and mix the product by causing it to undergo to-and-fro movement within the trough in order to prevent stagnation of the material at those points in which it is not subjected to the mechanical action of the screws.

Such apparatus, comprising several side-by-side and overlying screws, are of costly manufacture and require relatively complicated transmission systems for transmitting motion from a single geared motor unit to all the screws mounted within the trough.

Even though a plurality of side-by-side and overlying screws are provided, shredding and mixing are not completely satisfactory, because within the trough dead regions still exist in which the material remains stagnant.

In addition, apparatus of known type using several screws are of considerable overall size and are consequently difficult to handle in possibly narrow environments.

To obviate the drawbacks of the known art an apparatus for shredding and mixing fibrous products for animal feed production is already available of the type comprising a trough within which shredding and mixing means for said fibrous products are mounted.

The shredding means consist of at least one screw which is separated into two sections by an intermediate dividing baffle rigid with the screw shaft, said screw having a first section with a right-handed helix and a second section with a left-handed helix, said trough having a partly cylindrical base housing the screw, from the base there extending a substantially vertical wall and an opposing oblique wall.

An apparatus of this type is described for example in Italian patent application No. 21881 A/90 filed on 25.10.1990 in the name of the present Applicant.

The operation of such an apparatus has proved satisfactory.

However undesirable material stagnation may occur at the vertical wall in the intermediate region of the trough, in a position corresponding with the dividing baffle.

The object of the present invention is to obviate this drawback, by providing an apparatus for shredding and mixing fibrous products for animal feed preparation of the type comprising a trough (11) within which mixing and shredding means for said fibrous products are mounted, said means consisting of at least one screw (15) separated into two sections by an intermediate dividing baffle (18) rigid with the screw shaft, said screw having a first section (16) with a right-handed helix and a second section (17) with a left-handed helix, said trough (11) having a partly cylindrical base (14) housing the screw (15), from this base there extending a generally vertical wall (19) and an opposing oblige wall (20), characterised in that on said vertical wall (19), in a position corresponding with said intermediate dividing baffle (18), there is mounted an agitator device (27) able to prevent any stagnation of the product occurring against said vertical wall (19) and between said two sections (16, 17) of said screw (15).

The structural and operational features of the invention and its advantages compared with the known art will be more apparent from an examination of the ensuing description given with reference to the accompanying schematic drawings, which show an embodiment thereof incorporating the principles of the invention. In said drawings:

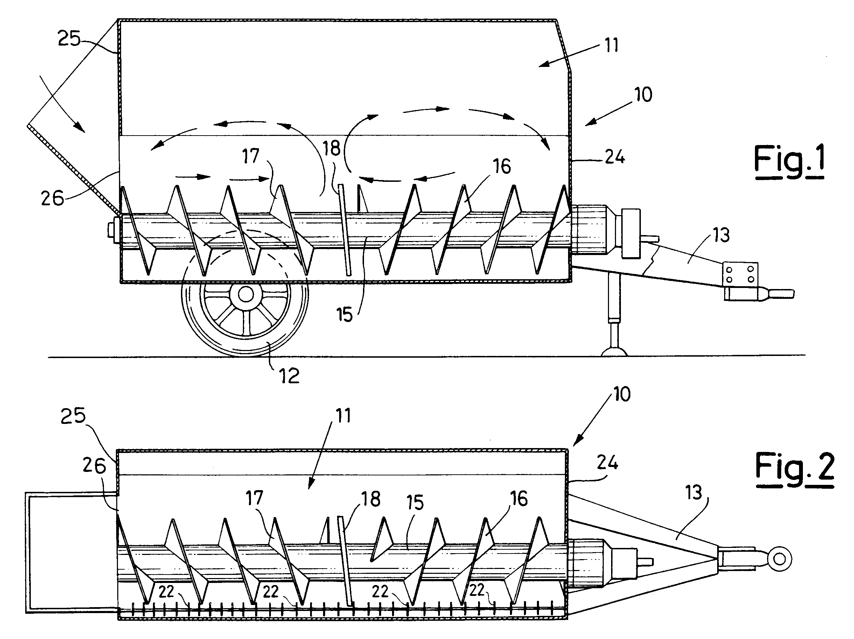

Figure 1 is a side elevation showing the apparatus of the invention;
Figure 2 is a plan view;
Figure 3 is a vertical section;
Figure 4 is a perspective view showing the apparatus trough, on the vertical wall of which the agitator device of the invention is mounted; and
Figure 5 is an enlarged section through the device of Figure 4.

With reference to the drawings, the apparatus of the invention is indicated overall by 10 and is structurally formed from a metal trough 11 mounted on wheels 12 and intended for example to be connected to a towing means, such as a tractor or the like, by a tow bar 13. The apparatus can however be self-propelled or fixed.

The trough base, consisting of a semi-cylindrical section 14, houses a single screw 15 comprising a right-handed section 16 and a left-handed section 17. An intermediate dividing baffle 18 separates said two sections 16 and 17 for the reason stated hereinafter.

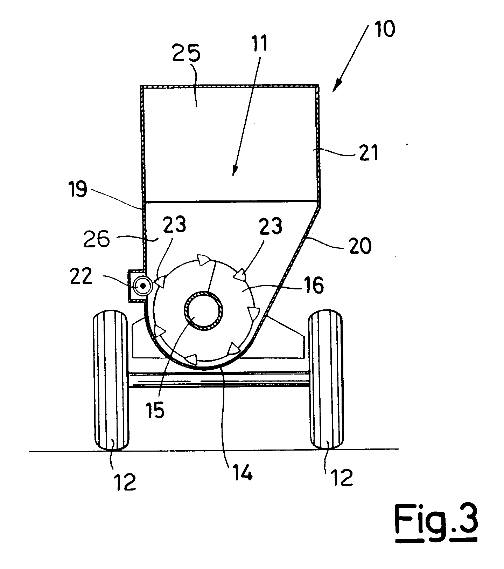

From the partly cylindrical base 14 of the trough 11 there extend a substantially vertical wall 19 and an opposing oblige wall 20 which then extends into a substantially vertical section 21 (Figure 3). From Figure 3 it can therefore be seen that the screw 15 is housed and rotates within the trough in a position asymmetric about the longitudinal middle plane through the trough.

The intermediate dividing baffle 18 is mounted rigid with the screw 15 with a slight double inclination to the mutually perpendicular axes passing through the centre of symmetry of the baffle 18.

Counter-blades 22 are provided to cooperate with the screw blades 23.

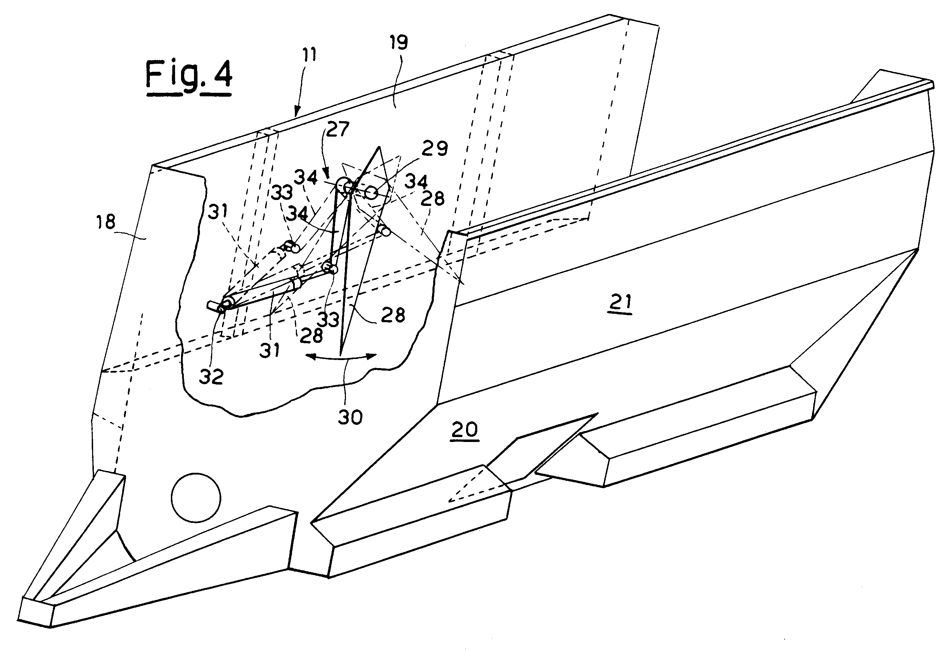

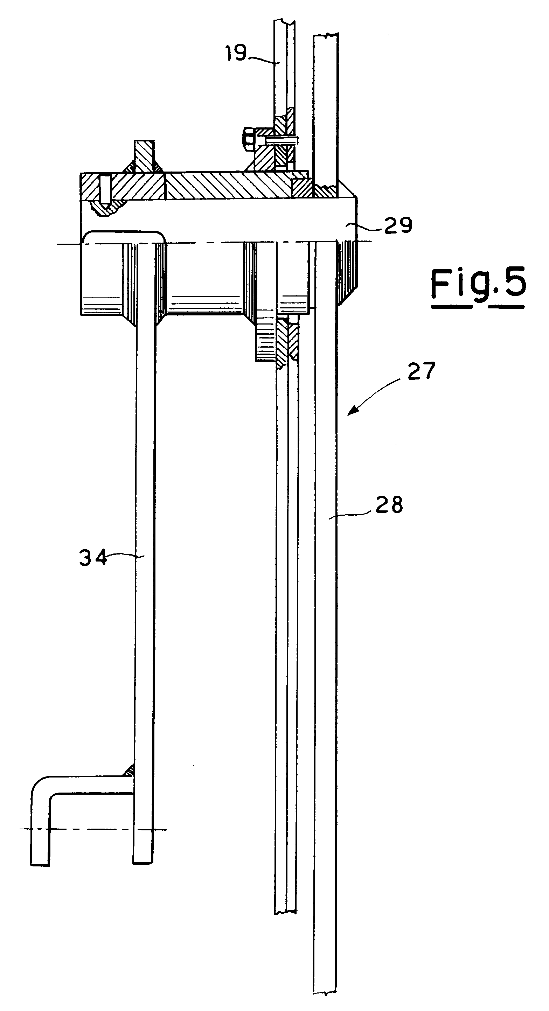

According to the present invention, as can be clearly seen from Figures 4 and 5 of the drawings, on the vertical wall 19 of the trough 11 in an intermediate position in correspondence with the dividing baffle 18 there is mounted an agitator device, indicated overall by 27, which is able to prevent any material stagnation against the vertical wall 19 between the two sections 16, 17 of the screw 15.

Said device 27 consists structurally of a plate 28 pivoted to rock on the vertical wall 19 of the trough 11 by a pin 29.

Said plate 28 is rocked in the directions of the arrow 30 by a hydraulic cylinder-piston unit 31 with its cylinder pivoted at 32 to the wall 19 and its rod pivoted at 33 to one end of an arm 34, the other end of which is rigid with the pin 29.

The described apparatus operates as follows.

The fibrous material loaded into the trough 11 from above or through the rear aperture 26 is urged by the right-handed section 16 and left-handed section 17 of the screw 15 towards the centre against the baffle 18, which induces the material to move upwards and return to the end walls 24, 25 of the trough 11 by the path indicated by the arrows, with continuous fountain-like movement.

The oblique wall 20 ensures that the material is fed to the screw 15, whereas the generally vertical wall 19 prevents stagnation of the material, which hence always remains in contact with the screw which conveys it towards the centre until it collides with the baffle 18.

According to the present invention, any stagnation of particular materials is prevented by the agitator device 27, which by the rocking movement of the plate 28 causes the material to again fall onto the sections 16, 17 of the screw 15.

The "lanceolate" configuration of the plate 28 can be varied according to requirements.

The particular configuration of the trough 11 and screw 15 combined with the agitator device 27 results in optimum mixing of the product, this positively influencing the quality of the feed prepared from said product.

The object stated in the introduction to the description is hence attained.

## Claims

1. An apparatus for shredding and mixing fibrous products for animal feed preparation, of the type comprising a trough (11) within which mixing and shredding means for said fibrous products are mounted, said means consisting of at least one screw (15) separated into two sections by an intermediate dividing baffle (18) rigid with the screw shaft, said screw having a first section (16) with a right-handed helix and a second section (17) with a left-handed helix, said trough (11) having a partly cylindrical base (14) housing the screw (15), from this base there extending a generally vertical wall (19) and an opposing oblique wall (20), characterised in that on said vertical wall (19), in a position corresponding with said intermediate dividing baffle (18), there is mounted an agitator device (27) able to prevent any stagnation of the product occurring against said vertical wall (19) and between said two sections (16, 17) of said screw (15).

2. An apparatus as claimed in claim 1, characterised in that said agitator device comprises a rocking plate (28) provided with operating means.

3. An apparatus as claimed in claim 2, characterised in that said plate (28) is of "lanceolate" configuration.

## Patentansprüche

1. Vorrichtung zum Zerreißen und Mischen von Faserprodukten zur Tierfutterherstellung, umfassend einen Trog (11), in welchem Misch- und Zerreißmittel für die Faserprodukte angeordnet sind, welche Mittel aus mindestens einer Schnecke (15) bestehen, die durch eine mit der Schneckenwelle starr verbundene zwischengeschaltete Trenn-Prallplatte (18) in zwei Abschnitte geteilt ist, wobei die Schnecke einen ersten Abschnitt (16) mit einem rechtsgängigen Schneckengang und einen zweiten Abschnitt (17) mit einem linksgängigen Schneckengang aufweist und der Trog (11) eine teilweise zylindrische Basis (14) zur Unterbringung der Schnecke (15) aufweist, von welcher Basis sich eine im allgemeinen vertikale Wand (19) und eine entgegengesetzt angeordnete schräge Wand (20) erstrecken, dadurch gekennzeichnet, daß an der vertikalen Wand (19) in einer Position entsprechend der zwischengeschalteten Trenn-Prallplatte (18) eine Rühreinrichtung (27) angeordnet ist, welche einen allfälligen Stau des Produkts an dieser vertikalen Wand (19) und zwischen den beiden Abschnitten (16, 17) der Schnecke (15) verhindern kann.

2. Vorrichtung nach Anspruch 1, dadurch gekennzeichnet, daß die Rühreinrichtung eine mit Betätigungsmitteln versehene hin- und hergehende Platte (28) aufweist.

3. Vorrichtung nach Anspruch 2, dadurch gekennzeichnet, daß die Platte (28) "lanzettenförmige" Gestalt hat.

## Revendications

1. Appareil de déchiquetage et de mixage de produits fibreux pour la préparation de nourriture animale, du type comprenant une cuve (11) à l'intérieur de laquelle sort montés des moyens de mixage et de déchiquetage, ces moyens étant constitués d'au moins une vis (15) séparée en deux sections par un déflecteur intermédiaire (18) solidaire de l'axe de la vis, cette vis présentant une première section (16) avec une hélice tournant à droite et une deuxième section (17) avec une hélice tournant à gauche, la cuve (11) possédant une base (14) partiellement cylindrique logeant la vis (15), une paroi (19) globalement verticale et une paroi (20) oblique qui lui est opposée s'étendant à partir de cette base, caractérisé en ce que, sur la paroi verticale (19), dans une position correspondant au déflecteur intermédiaire (18), est monté un agitateur (27) susceptible d'empêcher toute stagnation du produit de se produire contre la paroi verticale (19) et entre les deux sections (16, 17) de la vis (15).

2. Appareil selon la revendication 1, caractérisé en ce que l'agitateur comprend une plaque basculante (28) pourvue de moyens opératoires.

3. Appareil selon la revendication 2, caractérisé en ce que la plaque (28) présente une configuration en fer de lance.
